# EUROPÄISCHE PATENTSCHRIFT

(11) **EP 0 560 143 B1**
(45) Veröffentlichungstag und Bekanntmachung des Hinweises auf die Patenterteilung: **17.04.1996**
(21) Anmeldenummer: 93103017.5
(22) Anmeldetag: 26.02.1993
(51) Int. Cl.: G01B 7/30, G01D 5/16, G01D 5/04

(54) **Lagesensor zur Erfassung der Drehbewegung einer Welle**
Position sensor for determining the rotational motion of a shaft
Capteur de position de déterminer le déplacement rotatif d'un arbre

(30) Priorität: 06.03.1992 DE 4207064
(43) Veröffentlichungstag der Anmeldung: 15.09.1993
(73) Patentinhaber: DEERE & COMPANY, Moline, Illinois 61265 (US)
(72) Erfinder: Becker, Manfred, W-6710 Frankenthal (DE)
(74) Vertreter: Feldmann, Bernhard

(56) Entgegenhaltungen:
- EP-A- 0 153 102
- WO-A-81/02069
- DE-A- 2 724 828
- GB-A- 2 180 699
- US-A- 4 286 386
- DATABASE WPIL Week 8710, Derwent Publications Ltd., London, GB; AN 87-071548 & SU-A-1 244 653
- PATENT ABSTRACTS OF JAPAN vol. 014, no. 547 (P-1138) 5. Dezember 1990 & JP-A-22 34 011

## Beschreibung

Die Erfindung betrifft einen Lagesensor zur Erfassung der Drehbewegung einer Welle, insbesondere der Hubwelle einer Hebevorrichtung, bei der die Drehbewegung unmittelbar an der Welle abgenommen wird, gemäß dem Oberbegriff des Patentanspruchs 1. Ein derartiger Lagesensor ist aus JP-A-2 234 011 bekannt.

Derartige Lagesensoren finden insbesondere bei elektronischen Hubwerksregelungen von landwirtschaftlichen Fahrzeugen Anwendung. Das Ausgangssignal des Lagesensors dient hierbei als Istwertsignal bei der Lageregelung. Bei einigen käuflichen Ackerschleppern ist an der Hubwelle ein Steuerexzenter angeordnet, an dem ein federbelasteter Hebel anliegt, der ein Hydraulikventil der Hubwerksregelung beeinflußt. Hierbei wird kein elektrisches, der Drehlage der Welle entsprechendes Signal gewonnen, wie es für die Steuerung und Überwachung wünschenswert wäre. Ferner ist die bekannte Anordnung empfindlich gegen Verschmutzungen des Steuerexzenters und des Hebels, wodurch eine Verfälschung der Hubwerksregelung eintreten kann. Eine solche Verfälschung kann ihre Ursache auch in Durchbiegungen oder radialen Verschiebungen der Welle, die beispielsweise auf das Lagerspiel zurückzuführen sind, haben.

Die der Erfindung zugrunde liegende Aufgabe wird darin gesehen, einen Lagesensor der eingangs genannten Art anzugeben, durch den die genannten Nachteile vermieden werden. Insbesondere soll durch den Lagesensor ein elektrisches Lagesignal der Welle gewinnbar sein. Er soll bei rauhen Einsatzbedingungen zuverlässig arbeiten, kostengünstig herstellbar sein und eine einfache Montage ermöglichen.

Die Aufgabe wird erfindungsgemäß durch die kennzeichnenden Merkmale des Patentanspruchs 1 gelöst.

Ein wesentlicher Vorteil dieser erfindungsgemäßen Lösung ist darin zu sehen, daß der Lagesensor ein unmittelbar von der Drehlage der Welle abhängiges elektrisches Signal abgibt. Dabei ist kein Übertragungsgestänge mit den daraus resultierenden Fehlereinflüssen erforderlich. Der erfindungsgemäße Lagesensor ist einfach und kostengünstig herstellbar und auch für rauhe Einsatzbedingungen geeignet. Die zweite Verzahnung läßt sich in einem Gehäuse anordnen, welches einfach im Bereich der ersten Verzahnung montierbar ist.

Bei Wellen, die lediglich um einige Winkelgrade verdreht werden, wie dies beispielsweise bei hydraulischen Hubwerksregelungen der Fall ist, sind die Verzahnungen vorzugsweise als Zahnsegmente mit geringem Raumbedarf ausgebildet. Hierbei ist es zweckmäßig, das erste Zahnsegment als gesondertes Bauteil auszubilden, welches Montagelaschen trägt, mit denen es auf der Welle befestigbar, beispielsweise verschraubbar ist.

Einer besonders bevorzugten Ausgestaltung der Erfindung zufolge ist die zweite Verzahnung auf einer in einem Sensorgehäuse drehbar gelagerten Sensorwelle drehfest angeordnet. Das Sensorgehäuse seinerseits ist an dem die Welle aufnehmenden Wellengehäuse befestigbar. Das Sensorgehäuse wird vorzugsweise direkt an dem Wellengehäuse von außen angeflanscht. Die Sensorwelle überträgt die Drehbewegung der Welle auf das Potentiometer. Bei dieser Lösung läßt sich der Zahntrieb vollständig gegenüber der Umgebung isolieren und abdichten. Der geschützte Aufbau verhindert Beschädigungen oder das Eindringen von Staub und Schmutz.

Ferner ist es zweckmäßig, die Sensorwelle unmittelbar als Eingangswelle für das Potentiometer, welches vorzugsweise ein Drehpotentiometer ist, auszubilden.

Um eine gute Zugänglichkeit des Potentiometers und insbesondere der elektrischen Anschlüsse des Potentiometers zu ermoglichen, ist die Potentiometerwelle vorzugsweise durch das Sensorgehäuse geführt und das Potentiometer von außen an das Sensorgehäuse anflanschbar. Die Potentiometerwelle läßt sich gegenüber dem Sensorgehäuse ohne nennenswerten Aufwand abdichten. Ferner kann ein Potentiometer in abgedichteter Bauweise verwendet werden, so daß eine vollständige Abdichtung der empfindlichen Teile gegenüber Verschmutzung und Beschädigung gegeben ist.

Durch das Zahnspiel zwischen den Verzahnungen kann eine Wegerfassungshysterese auftreten, die sich störend auf die Regelung auswirkt. Daher wird ein federvorgespanntes Potentiometer verwendet, bei dem das Potentiometer durch die Feder in Richtung einer seiner Endlagen vorgespannt ist. Abgedichtete, federvorgespannte Potentiometer werden beispielsweise durch die Fa. Duncan, USA vertrieben.

Vorzugsweise läßt sich die zweite Verzahnung über die entsprechenden Endlagen der Drehbewegung der Welle hinaus verstellen. Diese Ausbildung ermöglicht einen Toleranzausgleich, wobei Durchbiegungen und radiale Bewegungen der Welle (Lagerspiel) ohne Signalverfälschung oder Beschädigung oder Bruch des Zahnradtriebes aufgenommen werden.

Gemäß einer besonders bevorzugten Ausgestaltung der Erfindung, die insbesondere bei Verwendung eines federvorgespannten Potentiometers vorteilhaft ist, ist zwischen der zweiten Verzahnung und dem Sensorgehäuse eine Federeinrichtung vorgesehen. Die Federeinrichtung ist vorzugsweise eine an der zweiten Verzahnung angeformte, sich in etwa in radialer Richtung erstreckende Federzunge, deren Federsteifigkeit wenigstens doppelt so groß ist wie die der Potentiometerfeder. In der Grundstellung der Welle wird die Federzunge durch die Kraft der Potentiometerfeder gegen das Sensorgehäuse gedrückt. Eine Verstellung der Welle über die Grundstellung hinaus ist möglich. Hierbei federt die Federzunge ein. Durch das Zusammenwirken von Potentiometerfeder und Federzunge ist die Anbauposition des Lagesensors definiert. Eine Justage bei der Montage erübrigt sich damit.

Die Verzahnungen und gegebenenfalls das Sensorgehäuse und die Sensorwelle sind vorzugsweise aus Kunststoff gefertigt.

Weitere vorteilhafte Ausgestaltungen und Weiterbildungen der Erfindung gehen aus den Unteransprüchen hervor.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:

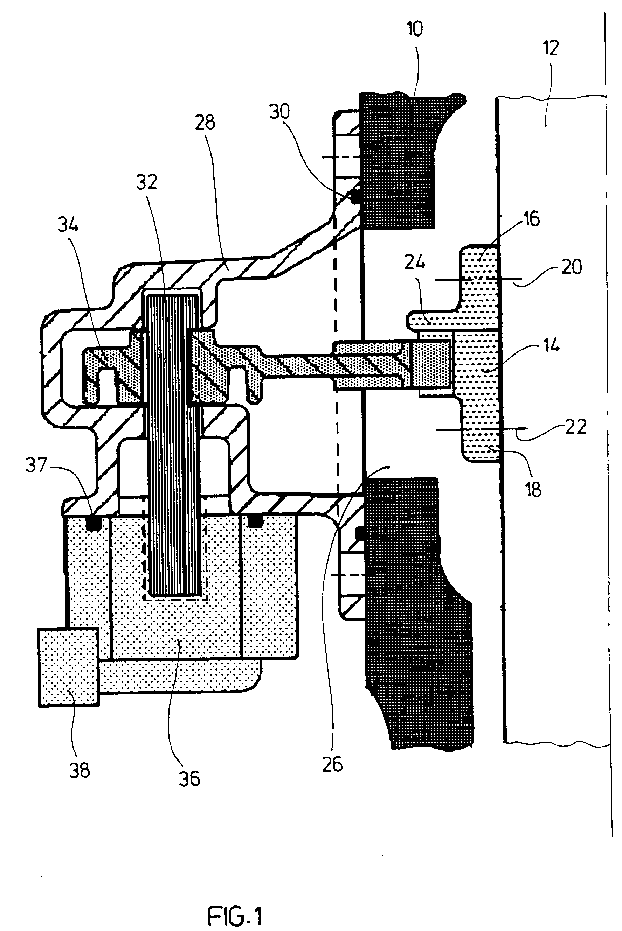

- Fig. 1: den Längsschnitt durch einen erfindungsgemäßen Lagesensor,
- Fig. 2: den Querschnitt durch ein Wellengehäuse mit einem angeflanschten erfindungsgemäßen Lagesensor, der teilweise im Schnitt dargestellt ist, und
- Fig. 3 bis 5: den Querschnitt durch einen erfindungsgemäßen Lagesensor in verschiedenen Betriebsstellungen.

In einem Wellengehäuse 10 aus Gußmetall ist die Hubwelle 12 für zwei nicht dargestellte Unterlenker eines Ackerschleppers drehbar gelagert. Auf der zylindrischen Oberfläche der Hubwelle 12 ist ein erstes Zahnsegment 14 befestigt. Für die Befestigung weist das erste Zahnsegment 14 zwei sich in axialer Richtung der Hubwelle 12, beidseits der Verzahnung erstreckende Montagelaschen 16, 18 auf, in denen sich Bohrungen zur Aufnahme von Befestigungsschrauben 20, 22 befinden. Das erste Zahnsegment 14 weist eine zur Hubwelle 12 konzentrische Verzahnung auf. Auf einer Seite der Verzahnung ist ein Versteifungskragen 24 angeformt, der die mechanische Stabilität des ersten Zahnsegmentes 14 sicherstellt.

Im Bereich des ersten Zahnsegmentes 14 weist das Wellengehäuse 10 eine Ausnehmung 26 auf, die durch ein hermetisch abgeschlossenes Sensorgehäuse 28 abgedeckt ist. Die Flanschverbindung zwischen Sensorgehäuse 28 und Wellengehäuse 10 ist durch einen Dichtungsring 30 abgedichtet.

In dem Sensorgehäuse 28 ist eine Sensorwelle 32 drehbar gelagert, die über eine Paßnut oder Keilverzahnung ein zweites Zahnsegment 34 drehfest trägt. Der Zahnbereich des zweiten Zahnsegmentes 34 erstreckt sich durch die Ausnehmung 26 in das Wellengehäuse 10. Die Zähne des zweiten Zahnsegmentes 34 stehen mit den Zähnen des ersten Zahnsegmentes 14 in Eingriff.

Ein Ende der Sensorwelle 32 ist aus dem Sensorgehäuse 28 herausgeführt und ragt in das Gehäuse eines Drehpotentiometers 36 hinein, welches an dieser Seite am Sensorgehäuse 28 festgeschraubt ist. Zwischen Sensorgehäuse 28 und Drehpotentiometer 36 ist ein Dichtungsring 37 zur Abdichtung vorgesehen. Am Potentiometergehäuse ist eine Steckerbuchse 38 angebracht, in der sich Kontakte für elektrische Anschlüsse befinden.

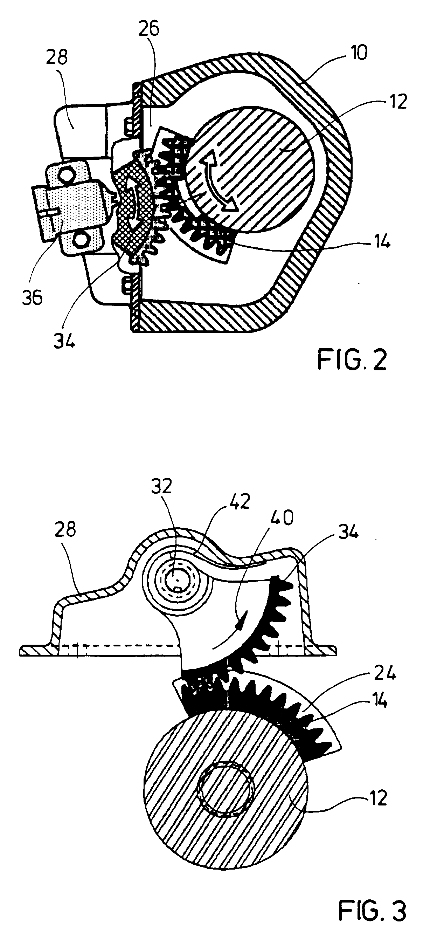

Eine Drehbewegung der Hubwelle 12 wird von dem ersten Zahnsegment 14 über das zweite Zahnsegment 34 und die Sensorwelle 32 auf das Potentiometer 36 übertragen, welches entsprechende elektrische Signale ausgibt. Die synchrone Bewegung der Zahnsegmente 14, 34 wird durch die beiden Doppelpfeile in Fig. 2 angedeutet. Das Potentiometer 36 ist federvorgespannt und drängt das zweite Zahnsegment 34 in die Richtung des Pfeiles 40, der in Fig. 3 dargestellt ist und der Grundstellung entspricht, in der das Hubwerk abgesenkt ist. Durch die Federvorspannung wird das Zahnspiel überwunden, so daß die Wegerfassungshysterese klein gehalten werden kann.

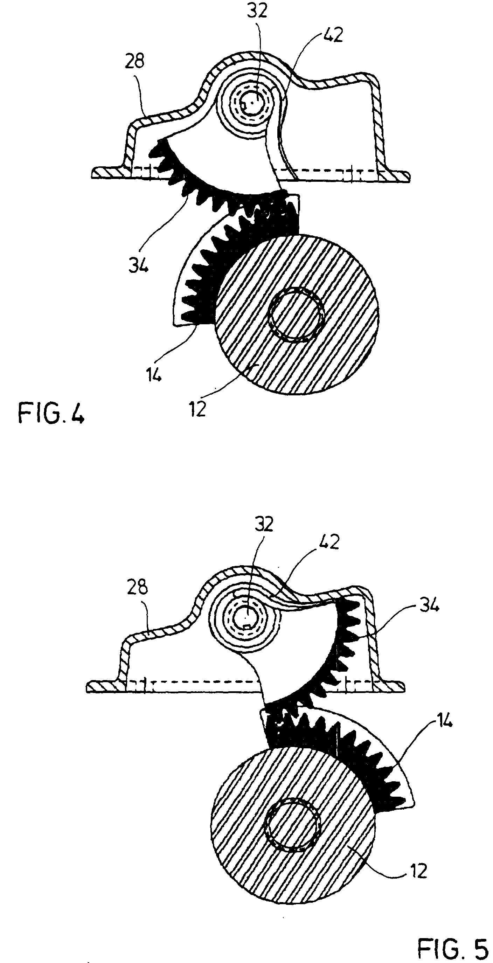

Die Fig. 3 stellt eine Lage der Hubwelle 12 und des Lagesensors dar, in der das Hubwerk voll abgesenkt ist (Grundstellung), während die Fig. 4 die der voll ausgehobenen Position des Hubwerkes entsprechende Lage der Hubwelle 12 und des Lagesensors zeigt. Es ist ersichtlich, daß in keiner dieser beiden Lagen eine der Seitenflächen des zweiten Zahnsegments 34 am Inneren des Sensorgehäuses 28 anliegt. Sollte die Welle sich aufgrund von ungünstigen Toleranzlagen, Durchbiegungen oder anderen Bewegungen über die in den Figuren 3 und 4 dargestellten Lagen weiter verstellen, so kann das zweite Zahnsegment 34 ausweichen, ohne gegen das Sensorgehäuse 28 zu stoßen, so daß Beschädigungen des Zahntriebes vermieden werden können.

An dem zweiten Zahnsegment 34 ist eine in Drehrichtung hervorstehende, im wesentlichen radial ausgerichtete Federzunge 42 angeformt, die zu einer in Umfangsrichtung weisenden Seitenfläche des zweiten Zahnsegmentes 34 in etwa parallel und zu dieser beabstandet verläuft. In der in Fig. 3 dargestellten Grundstellung der Hubwelle 12 und des Lagesensors stützt sich die Federzunge 42 an dem Sensorgehäuse 28 ab. Die in Fig. 3 dargestellte Lage nimmt das Zahnsegment 34 infolge der Wirkung der Potentiometerfeder auch dann ein, wenn das Sensorgehäuse 28 noch nicht an dem Wellengehäuse 10 befestigt ist. Bevor das Sensorgehäuse 28 an dem Wellengehäuse 10 befestigt wird, muß sich die Hubwelle 12 in der dargestellten Lage (Grund- oder Montagestellung) befinden. Für einen Toleranzausgleich kann der Zwischenraum zwischen dem zweitem Zahnsegment 34 und dem Sensorgehäuse 28 gegen die Kraft der Federzunge 42 verkleinert werden, wie dies aus Fig. 5 hervorgeht.

Ist das Sensorgehäuses 28 noch nicht an das Wellengehäuse 10 angeflanscht, so übt die Potentiometerfeder eine Kraft auf die zweite Verzahnung 34 aus, die über die Federzunge 42 am Sensorgehäuse 28 abgestützt wird und die zweite Verzahnung 34 in eine Grund- oder Nullstellung einstellt. Hierdurch wird eine definierte Ausgangs- und Montagelage geschaffen. Vor dem Anbau des Sensorgehäuses 28 an das Wellengehäuse 10 wird die Hubwelle 12 in ihre Grundstellung gebracht, bei der die Unterlenker ihre unterste Lage einnehmen. Wird jetzt das Sensorgehäuses 28 an das Wellengehäuse 10 angeflanscht, so daß die Verzahnungen des ersten und des zweiten Zahnsegmentes 14, 34 ineinandergreifen, stehen sowohl das Potentiometer 36 als auch die Hubwelle 12 in ihrer Grund- oder Nullstellung. Beim Anheben der Unterlenker werden die Hubwelle 12 und das Potentiometer 36 in fester Relation zueinander in positiver Richtung verdreht.

Durch das Zusammenwirken von Potentiometerfeder und Federzunge 42 ist die Anbauposition eindeutig definiert. Die Ausbildung des Lagesensors mit Potentiometerfeder und Federzunge 42 ermöglicht eine einfach Montage des Sensorgehäuses 28 am Wellengehäuse 10, die keine Justagearbeiten zur Einstellung einer Null- oder Grundposition erfordert.

Wegen der geringen zu übertragenden Kräfte können sämtliche Bauteile in Kunststoff ausgeführt sein.

Auch wenn die Erfindung lediglich anhand eines Ausführungsbeispiels beschrieben wurde, erschließen sich für den Fachmann im Lichte der vorstehenden Beschreibung viele verschiedenartige Alternativen, Modifikationen und Varianten, die unter die vorliegende Erfindung fallen.

## Patentansprüche

1. Lagesensor zur Erfassung der Drehbewegung einer Welle, insbesondere der Hubwelle (12) einer Hebevorrichtung, die in einem Wellengehäuse (10) gelagert ist und eine konzentrisch zu ihr angeordnete erste Verzahnung (14) trägt, mit einem an das Wellengehäuse (10) anflanschbaren Sensorgehäuse (28), in dem eine Sensorwelle (32) gelagert ist, welche eine zweite mit der ersten Verzahnung (14) in Eingriff stehende Verzahnung (34) trägt und ein Potentiometer antreibt, dadurch gekennzeichnet, daß die erste Verzahnung als auf der Welle (12) befestigbares Zahnsegment (14, 34) ausgebildet ist, daß das Potentiometer ein in seine Grundstellung federvorgespanntes Potentiometer (36) ist und daß zwischen der zweiten Verzahnung (34) und dem Sensorgehäuse (28) wenigstens eine Federeinrichtung (42) vorgesehen ist, deren Wirkung bei Erreichen der Grundstellung der Welle (12) einsetzt und die gegen eine Verstellung der zweiten Verzahnung (34) über die Grundstellung hinaus eine Federkraft ausübt.

2. Lagesensor nach Anspruch 1, dadurch gekennzeichnet, daß die zweite Verzahnung als Zahnsegment (14, 34) ausgebildet ist.

3. Lagesensor nach Anspruch 1 oder 2, dadurch gekennzeichnet, daß das erste Zahnsegment (14) Montagelaschen (16, 18) trägt, mit denen es auf der Welle (12) befestigbar, beispielsweise festschraubbar, ist.

4. Lagesensor nach einem der Ansprüche 1 bis 3, dadurch gekennzeichnet, daß die zweite Verzahnung (34) auf der im Sensorgehäuse drehbar gelagerten Sensorwelle (32) drehfest angeordnet ist und daß die Sensorwelle (32) unmittelbar als Eingangswelle für das Potentiometer (36) dient, welches ein Drehpotentiometer ist.

5. Lagesensor nach Anspruch 4, dadurch gekennzeichnet, daß die Sensorwelle (32) durch das Sensorgehäuse (28) geführt ist und das Potentiometer (36) von außen an das Sensorgehäuse (28) anflanschbar ist.

6. Lagesensor nach einem der Ansprüche 1 bis 5, dadurch gekennzeichnet, daß die zweite Verzahnung (34) sich über die entsprechenden Endlagen der Drehbewegung der Welle (12) hinaus verstellen läßt.

7. Lagesensor nach einem der Ansprüche 1 bis 6, dadurch gekennzeichnet, daß die Federsteifigkeit der Federeinrichtung (42) wenigstens doppelt so groß ist wie die der Potentiometerfeder.

8. Lagesensor nach einem der Ansprüche 1 bis 7, dadurch gekennzeichnet, daß die Federeinrichtung eine an der zweiten Verzahnung (34) angeformte, sich in etwa radial erstreckende Federzunge (42) ist.

9. Lagesensor nach einem der Ansprüche 1 bis 8, dadurch gekennzeichnet, daß die Verzahnungen (14, 34) und gegebenenfalls das Sensorgehäuse (28) und die Sensorwelle (32) aus Kunststoff gefertigt sind.

## Claims

1. Position sensor for determining the rotational movement of a shaft, in particular a rockshaft (12) of a hitch mechanism, which is mounted in a shaft housing (10) and has a first tooth arrangement (14) arranged concentrically to it, with a sensor housing (28) which may be flange-mounted onto the shaft housing (10), and said sensor housing receives a sensor shaft (32), which has a second tooth arrangement (34) engaging with the first tooth arrangement (14) and which drives a potentiometer, characterised in that the first tooth arrangement is constructed as a gear segment (14, 34) which can be fastened to the shaft (12); that the potentiometer is a spring pre-loaded potentiometer (36) in its base position; and that between the second tooth arrangement (34) and the sensor housing (28), at least one spring arrangement (42) is provided, the action of which commences when the base position of the shaft (12) has been reached and which exerts a spring force against displacement of the second tooth arrangement (34) beyond the base position.

2. Position sensor according to Claim 1, characterised in that the second tooth arrangement is constructed as a gear segment (14, 34).

3. Position sensor according to Claim 1 or 2, characterised in that the first gear segment (14) is provided with mounting brackets (16, 18), by means of which it may be fastened, e.g. screwed tight, onto the shaft (12).

4. Position sensor according to one of Claims 1 to 3, characterised in that the second tooth arrangement (34) is non-rotatably disposed on the sensor shaft (32) rotatably mounted on the sensor housing; and that the sensor shaft (32) acts directly as an input shaft for the potentiometer (36) which is a rotary potentiometer.

5. Position sensor according to Claim 4, characterised in that the sensor shaft (32) is directed through the sensor housing (28) and the potentiometer (36) may be flange-mounted from the outside onto the sensor housing (28).

6. Position sensor according to one of Claims 1 to 5, characterised in that the second tooth arrangement (34) can be displaced beyond the corresponding limit positions of the rotational movement of the shaft (12).

7. Position sensor according to one of Claims 1 to 6, characterised in that the spring rigidity of the spring arrangement (42) is at least double that of the potentiometer spring.

8. Position sensor according to one of Claims 1 to 7, characterised in that the spring arrangement is a spring tongue (42) formed on the second tooth arrangement (34) and extending approximately radially.

9. Position sensor according to one of Claims 1 to 8, characterised in that the tooth arrangements (14, 34) and, optionally, the sensor housing (28) and the sensor shaft (32) are made of plastic.

## Revendications

1. Capteur de position pour détecter le mouvement de rotation d'un arbre, notamment de l'arbre de levage (12) d'un dispositif de levage, qui est monté dans un carter d'arbre (10) et porte une première denture (14), concentrique à l'arbre, et comportant un boîtier de capteur (28) pouvant être raccordé par bride au carter d'arbre (10) et dans lequel est tourillonné un arbre (32) du capteur, qui porte une seconde denture (34) qui engrène avec la première denture (14) et entraîne un potentiomètre, caractérisé en ce que la première denture est agencée sous la forme d'un segment denté (14,34) pouvant être fixé à l'arbre (12), que le potentiomètre est un potentiomètre (36) précontraint par un ressort dans sa position de base et qu'entre la seconde denture (34) et le boîtier de capteur (28) est prévu au moins un dispositif à ressort (42), dont l'action intervient lorsque l'arbre (12) atteint sa position de base et qui applique une force élastique à l'encontre d'un déplacement de la seconde denture (34) au-delà de sa position de base.

2. Capteur de position selon la revendication 1, caractérisé en ce que la seconde denture est agencée sous la forme d'un segment denté (14,34).

3. Capteur de position selon la revendication 1 ou 2, caractérisé en ce que le premier segment denté (14) porte des pattes de montage (16,18), à l'aide desquelles il peut être fixé, par exemple serré à bloc, sur l'arbre (12).

4. Capteur de position selon l'une des revendications 1 à 3, caractérisé en ce que la seconde denture (34) est disposée d'une manière bloquée en rotation sur l'arbre (32) du capteur, monté de manière à pouvoir tourner dans le boîtier de capteur, et que l'arbre (32) du capteur, qui est monté de manière à pouvoir tourner dans le boîtier du capteur, et que l'arbre (32) du capteur est utilisé directement comme arbre d'entrée pour le potentiomètre (36), qui est un potentiomètre rotatif.

5. Capteur de position selon la revendication 4, caractérisé en ce que l'arbre du capteur (32) est guidé dans le boîtier (28) du capteur et que le potentiomètre (36) peut être raccordé par brides, à partir de l'extérieur, au boîtier (28) du capteur.

6. Capteur de position selon l'une des revendications 1 à 5, caractérisé en ce que la seconde denture (34) peut être déplacée au-delà des positions d'extrémité correspondantes du mouvement de rotation de l'arbre (12).

7. Capteur de position selon l'une des revendications 1 à 6, caractérisé en ce que la raideur élastique du dispositif à ressort (42) est égale au moins au double de celle du ressort du potentiomètre.

8. Capteur de position selon l'une des revendications 1 à 7, caractérisé en ce que le dispositif à ressort est une languette élastique (42) qui est formée sur la seconde denture (34) et s'étend approximativement radialement.

9. Capteur de position selon l'une des revendications 1 à 8, caractérisé en ce que les dentures (14,34) et éventuellement le boîtier (28) du capteur et l'arbre (32) du capteur sont réalisés en matière plastique.
